# EUROPÄISCHE PATENTANMELDUNG

(11) **EP 3 935 948 A1**
(43) Veröffentlichungstag der Anmeldung: **12.01.2022**
(21) Anmeldenummer: 20184479.2
(22) Anmeldetag: 07.07.2020
(51) Int. Cl.: A21B 1/48, A21B 3/07, A21B 3/18, A21B 3/16, A21B 5/02

(54) **BACKVORRICHTUNG UND VERFAHREN ZUR VERMEIDUNG ODER BEHEBUNG EINES PRODUKTSTAUS**

(71) Anmelder: Bühler Food Equipment GmbH, 2100 Leobendorf (AT)
(72) Erfinder: Bibaric, Markus, 3400 Kierling (AT)
(74) Vertreter: Puchberger & Partner Patentanwälte

(57) **Zusammenfassung**

Die Erfindung betrifft eine Backvorrichtung (1) und ein Verfahren, wobei die Backvorrichtung (1) mehrere Backformen (9) umfasst, welche entlang eines Endlosförderers (3) angeordnet sind und jeweils nacheinander: einen Auftragsbereich (4), einen Schließbereich (5), einen Backraum (6), einen Öffenbereich (7), und einen Entnahmebereich (8), durchlaufen, wobei eine Transporteinrichtung (10) vorgesehen ist, wobei die Förderrichtung (14) der Transporteinrichtung (10) umkehrbar ist, wobei eine Abnahmevorrichtung (11) vorgesehen ist, wobei eine Detektionsvorrichtung (12) vorgesehen ist, welche zur Detektion einer Fehlfunktion eingerichtet ist, wobei die Backvorrichtung (1) eine Steuervorrichtung (13) umfasst, welche dazu eingerichtet ist, die Förderrichtung (14) der Transporteinrichtung umzukehren, wenn eine Fehlfunktion durch die Detektionsvorrichtung (12) erkannt wird, und wobei die Abnahmevorrichtung (11) dazu eingerichtet ist, die Waffelformkörper (2), aus den geöffneten Backformen (9) auf die Transporteinrichtung (10) zu überführen und die von der Transporteinrichtung (10) in die Backvorrichtung (1) transportierten Waffelformkörper (2) zu zerkleinern, wenn die Förderrichtung (14) der Transporteinrichtung umgekehrt ist.

## Beschreibung

Die Erfindung betrifft eine Backvorrichtung und ein Verfahren gemäß den Merkmalen der unabhängigen Patentansprüche.

Gattungsgemäße Backvorrichtungen zur industriellen Herstellung von Waffelformkörpern sind in unterschiedlichen Ausführungsformen bekannt. Herkömmliche Backvorrichtungen weisen ein Gehäuse, insbesondere ein wärmegedämmtes Gehäuse, mit einem beheizten Innenraum auf. In diesem Innenraum werden mehrere Backformen entlang eines Endlosförderers nacheinander durch unterschiedliche Bereiche befördert. Meist sind die Backformen als Backzangen ausgebildet. Diese werden nacheinander: durch einen Auftragsbereich mit einer Teigauftragsvorrichtung zum Auftragen einer Backmasse auf die geöffneten Backformen, durch einen Schließbereich zum Schließen der Backformen, durch einen beheizten Backraum zum Backen der in die Backformen eingebrachten Backmasse, durch einen Öffenbereich zum Öffnen der Backformen und durch einen Entnahmebereich mit einer Entnahmevorrichtung zur Entnahme der aus der Backmasse gebackenen Formkörper befördert. Anschließend beginnt der Prozess von vorne.

Hierbei gibt es gemäß Stand der Technik zwei Bauformen. Gemäß einer ersten Bauform ist das Gehäuse durch eine sogenannte Vorkopfwand in einen Vorkopf und in einen Backraum getrennt. Im Backraum sind Heizvorrichtungen vorgesehen, die die Temperatur im Innenraum zum Backen der Waffelformkörper auf über 150°C, insbesondere auf über 180°C bringen. Im Vorkopf sind Komponenten wie die Teigauftragsvorrichtung und die Entnahmevorrichtung vorgesehen. In diesem Bereich herrscht eine niedrigere Temperatur von über 60 °C und meist unter 100 °C.

Gemäß einer zweiten Bauform ist keine Vorkopfwand vorgesehen, womit auch die Komponenten Auftragsvorrichtung und Entnahmevorrichtung in einem Bereich angeordnet sind, in dem eine Temperatur von über 150°C, bevorzugt von über 180°C herrscht.

Bei herkömmlichen Backvorrichtungen muss die Backvorrichtung geöffnet werden, um ein verkeiltes bzw. hängen gebliebenes Waffelblatt zu entfernen. Nachteilig daran ist aber, dass durch diese Öffnung viel Wärme aus der Backvorrichtung in die Umgebung verloren geht und der Backprozess in der Backvorrichtung angehalten werden muss, um die Bediensicherheit gewährleisten zu können.

Aufbauend auf dem Stand der Technik gibt es eine Nachfrage nach gattungsgemäßen Backvorrichtungen, deren Effizienz verbessert ist. Hierbei spielen Faktoren wie Energieverbrauch, Produktdurchsatz, Wartungsintervalle und Bediensicherheit eine große Rolle.

Aufgabe der Erfindung ist es nun, eine gattungsgemäße Backvorrichtung zu schaffen, die eine verbesserte Effizienz aufweist.

Die erfindungsgemäße Aufgabe wird insbesondere durch die Merkmale der unabhängigen Patentansprüche gelöst.

Die Erfindung betrifft insbesondere eine Backvorrichtung zum Herstellen gebackener, bevorzugt essbarer, Waffelformkörper, wobei mehrere Backformen entlang eines Endlosförderers angeordnet sind und jeweils nacheinander: einen Auftragsbereich zum Einbringen einer Backmasse in die geöffneten Backformen, einen Schließbereich zum Schließen der Backformen, einen, insbesondere beheizten, Backraum zum Backen der in den Backformen eingebrachten Backmasse, einen Öffenbereich zum Öffnen der Backformen, und einen Entnahmebereich zur Entnahme der aus der Backmasse gebackenen formstabilen Waffelformkörper aus den geöffneten Backformen, durchlaufen, wobei eine Transporteinrichtung zum Transport der entnommenen Waffelformkörper aus der Backvorrichtung, insbesondere aus dem Backraum, vorgesehen ist, wobei die Förderrichtung der Transporteinrichtung umkehrbar ist, und wobei zur Entnahme der Waffelformkörper aus den geöffneten Backformen eine Abnahmevorrichtung vorgesehen ist.

Bevorzugt ist vorgesehen, dass eine Detektionsvorrichtung, insbesondere eine Lichtschranke, vorgesehen ist, welche zur Detektion einer Fehlfunktion eingerichtet ist, dass die Backvorrichtung eine Steuervorrichtung zur, insbesondere automatisierten, Steuerung der Förderrichtung der Transporteinrichtung umfasst, welche dazu eingerichtet ist, die Förderrichtung der Transporteinrichtung umzukehren, wenn eine Fehlfunktion durch die Detektionsvorrichtung erkannt wird, dass die Abnahmevorrichtung dazu eingerichtet ist, die Waffelformkörper, aus den geöffneten Backformen auf die Transporteinrichtung zu überführen und die von der Transporteinrichtung in die Backvorrichtung, insbesondere in den Backraum, transportierten Waffelformkörper zu zerkleinern, wenn die Förderrichtung der Transporteinrichtung umgekehrt ist.

Die Backformen können als öffen- und schließbare Backzangen ausgebildet sein. Gegebenenfalls erhöht sich der Druck in der Backform während des Backens durch aus der Backmasse austretende flüchtige Backmassenbestandteile.

Die Backvorrichtung kann von einem Backvorrichtungsgehäuse umgeben sein.

Die Backvorrichtung kann eine längs einer in sich geschlossenen Umlaufbahn kontinuierlich umlaufende und sich durch den Backraum bewegende endlose Backzangenkette besitzen.

Gegebenenfalls erstreckt sich die Backzangenkette von einem vorderen Umlenkbereich bis zu einem hinteren Umlenkbereich und umfasst miteinander gekoppelte Backzangenwagen mit auf- und zumachbaren, insbesondere auf- und zuklappbaren, Backzangen.

Insbesondere sind die Waffelformkörper, knusprig spröde und/oder plattenförmig, ausgebildet. Es sind aber gegebenenfalls auch Backprodukte in der Backvorrichtung herstellbar.

Insbesondere ist vorgesehen, dass die Abnahmevorrichtung der Backvorrichtung durch einen ersten Antrieb und die Transporteinrichtung durch einen zweiten Antrieb antreibbar ist. Gegebenenfalls sind der erste und der zweite Antrieb durch die Steuervorrichtung steuer- und/oder regelbar.

Die Transporteinrichtung kann als Auslaufband, insbesondere als Rundriemen, ausgebildet sein.

Die Transporteinrichtung kann die entnommenen Waffelformkörper durch eine Produktöffnung aus der Backvorrichtung, insbesondere aus dem Backraum, befördern.

Um das Entweichen von heißen Gasen, insbesondere heißen Backraumgasen, vermeiden zu können, ist die Produktöffnung, durch welche der Waffelformkörper aus der Backvorrichtung befördert wird, gegebenenfalls schlitzförmig ausgestaltet und/oder weist im Wesentlichen die Größe, insbesondere die Höhe und die Breite, des Waffelformkörpers auf.

Die Backvorrichtung kann gegebenenfalls ausschließlich eine Produktöffnung und eine Abfallöffnung aufweisen. Insbesondere können, insbesondere im Bereich des vorderen Umlenkbereichs, mindestens eine Öffnung zur Ausgabe der gebackenen Waffelformkörper, die sogenannte Produktöffnung, und/oder mindestens eine Öffnung zum Austrag des Backabfalls, die sogenannte Abfallöffnung, vorgesehen sein.

Die Backvorrichtung kann auch mit einer Steuervorrichtung zur Steuerung der Förderrichtung der Transporteinrichtung verbunden sein.
Gegebenenfalls ist die Detektionsvorrichtung dazu eingerichtet, die Anzahl der von der Transporteinrichtung aus der Backvorrichtung, insbesondere aus dem Backraum, transportierten Waffelformkörper zu detektieren.

Gegebenenfalls ist vorgesehen, dass zur Entnahme der Waffelformkörper aus den geöffneten Backformen eine Abnahmevorrichtung vorgesehen ist, dass die Abnahmevorrichtung dazu eingerichtet ist, die Waffelformkörper, im Wesentlichen beschädigungsfrei, aus den geöffneten Backformen auf die Transporteinrichtung zu überführen, dass eine Detektionsvorrichtung, insbesondere eine Lichtschranke, vorgesehen ist, dass die Detektionsvorrichtung zur Detektion eines Waffelblattstaus eingerichtet ist, dass die Backvorrichtung eine Steuervorrichtung zur Steuerung der Förderrichtung der Transporteinrichtung umfasst, und dass die Steuervorrichtung dazu eingerichtet ist, die Förderrichtung der Transporteinrichtung umzukehren.

Gegebenenfalls ist die Detektionsvorrichtung dazu eingerichtet, das Fehlen von Waffelformkörpern zu detektieren. Insbesondere wird die Förderrichtung der Transportvorrichtung durch die Steuervorrichtung, insbesondere automatisch, umgekehrt, wenn die Abwesenheit eines Waffelformkörpers durch die Detektionsvorrichtung detektiert wird. Durch die Richtungsumkehr kann insbesondere mindestens ein Waffelformkörper durch die Abnahmevorrichtung zerkleinert und gegebenenfalls in die darunter befindliche Räumanordnung befördert werden.

Insbesondere wird eine Fehlfunktion detektiert, wenn von der Detektionsvorrichtung, insbesondere von der Lichtschranke, durchgehend, insbesondere unterbrechungsfrei, ein Waffelformkörper detektiert wird. Das heißt, dass eine Fehlfunktion gegebenenfalls dann detektiert wird, wenn ein Waffelformkörper die Detektionsvorrichtung, insbesondere die Lichtschranke, durchgehend, insbesondere unterbrechungsfrei, blockiert.

Insbesondere wird eine Fehlfunktion detektiert, wenn von der Detektionsvorrichtung, insbesondere von der Lichtschranke, die Abwesenheit eines Waffelformkörpers detektiert wird. Mit anderen Worten wird eine Fehlfunktion detektiert, wenn gegebenenfalls zwar ein Waffelformkörper aufgegossen wird, aber das Fehlen dieses Waffelformkörpers, insbesondere auf der Transportvorrichtung, von der Detektionsvorrichtung detektiert wird.

Insbesondere wird eine Fehlfunktion detektiert, wenn von der Detektionsvorrichtung, insbesondere von der Lichtschranke, ein Waffelformkörperstau detektiert wird. Ein Waffelformkörperstau liegt insbesondere dann vor, wenn mindestens ein Waffelformkörper in der Backvorrichtung, insbesondere im Bereich der Produktöffnung, verkeilt, gestaut und/oder hängen geblieben ist.

Gegebenenfalls ist vorgesehen, dass die Backvorrichtung derart ausgestaltet ist, dass in einem Normalbetriebsmodus der Backvorrichtung die entnommenen Waffelformkörper mit der Transporteinrichtung aus der Backvorrichtung, insbesondere aus dem Backraum, transportiert werden, und dass die Backvorrichtung derart ausgestaltet ist, dass in einem Umkehrbetriebsmodus der Backvorrichtung die Förderrichtung der Transporteinrichtung gegenüber dem Normalbetriebsmodus umgekehrt ist.

Falls sich Waffelformkörper verkeilen, hängenbleiben und/oder stauen, kann dieser Stau behoben werden, indem die Förderrichtung, insbesondere die Drehrichtung, der Transporteinrichtung kurzzeitig umgekehrt wird.

In diesem Fall kann die Transporteinrichtung die Waffelformkörper nicht mehr aus der Backvorrichtung heraus, sondern in die Backvorrichtung hinein fördern. Die Förderrichtung der Transporteinrichtung im Umkehrbetriebsmodus kann entgegengesetzt der Förderrichtung der Transporteinrichtung im Normalbetriebsmodus sein.

Gegebenenfalls ist im Umkehrbetriebsmodus die Drehrichtung der Transporteinrichtung entgegengesetzt zu der Drehrichtung der Abnahmevorrichtung.

Dadurch ist es gegebenenfalls möglich, dass die von der Transporteinrichtung in die Backvorrichtung hineinbeförderten Waffelformkörper von der Abnahmevorrichtung in, insbesondere große grobe, Bruchstücke, zerdrückt und/oder zerkleinert werden.

Insbesondere kann durch die Umkehrung der Förderrichtung der Transporteinrichtung die verkeilten, hängen gebliebenen und/oder Stau verursachenden Waffelformkörper entfernt werden. In weitere Folge kann die Backvorrichtung wieder im Normalbetriebsmodus betrieben werden, wodurch die Waffelformkörper wieder aus der Backvorrichtung befördert werden können.

Die Backvorrichtung ist gegebenenfalls einmal, niemals oder auch mehrmals während des Betriebs der Backvorrichtung im Umkehrbetriebsmodus betreibbar.

Im Normalbetriebsmodus sind die Waffelformkörper gegebenenfalls in Richtung der Produktöffnung förderbar.

Im Umkehrbetriebsmodus sind die Waffelformkörper gegebenenfalls in Richtung der Abnahmevorrichtung förderbar.

Die Drehrichtung der Abnahmevorrichtung ist im Normalbetriebsmodus und im Umkehrbetriebsmodus gleich.

Gegebenenfalls ist vorgesehen, dass die Abnahmevorrichtung mindestens einen Abnahmearm aufweist, dass die Transporteinrichtung mindestens eine Transportvorrichtung, insbesondere mindestens zwei beabstandet voneinander angeordnete, Transportvorrichtungen umfasst, und dass der mindestens eine Abnahmearm und die mindestens eine Transportvorrichtung kammförmig ineinandergreifen.

Insbesondere ist vorgesehen, dass die Abnahmevorrichtung mindestens einen Abnahmearm aufweist. Bevorzugt weist die Abnahmevorrichtung mindestens drei sternförmig angeordnete Abnahmearme auf.

Insbesondere ist die Abnahmevorrichtung als Abnahmestern ausgebildet. Gegebenenfalls können die Abnahmearme und/oder Abnahmeelemente sternförmig an der Abnahmevorrichtung angeordnet sein.

Die Abnahmearme können jeweils mindestens ein Abnahmeelement umfassen. Bevorzugt umfassen die Abnahmearme jeweils mindestens zwei beabstandet voneinander angeordnete Abnahmeelemente.

Die Transporteinrichtung kann mindestens zwei beabstandet voneinander angeordnete Transportvorrichtungen umfassen.

Gegebenenfalls ist die Abnahmevorrichtung derart ausgestaltet, dass die Abnahmevorrichtung, insbesondere bei deren Drehung, kammförmig in die Transporteinrichtung eingreift.

Bei der Drehung der Abnahmevorrichtung bewegt sich der mindestens eine Abnahmearm der Abnahmevorrichtung gegebenenfalls durch den Abstand zwischen den mindestens zwei Transportvorrichtungen der Transporteinrichtung.

Bevorzugt bewegt sich bei der Drehung der Abnahmevorrichtung mindestens ein Abnahmeelement eines Abnahmearms durch den Abstand zwischen den mindestens zwei Transportvorrichtungen der Transporteinrichtung.

Dadurch kann, insbesondere im Umkehrbetriebsmodus, ein Waffelformkörper durch das Zusammenwirken der Abnahmevorrichtung und der Transporteinrichtung zerkleinert oder zerdrückt werden. Insbesondere werden die Waffelformkörper durch das kammförmige Ineinandergreifen der Abnahmevorrichtung und der Transporteinrichtung zerkleinert.

Gegebenenfalls ist vorgesehen, dass die Backvorrichtung eine Räumanordnung zum automatischen oder automatisierten Austrag von im Backraum anfallendem Backabfall und/oder von Waffelformkörpern umfasst.

Gegebenenfalls ist vorgesehen, dass die Räumanordnung einen als Endlosförderer ausgebildeten Räumförderer umfasst, dass der Räumförderer oder mindestens die an dem Räumförderer gegebenenfalls angebrachten Räumelemente unterhalb des Endlosförderers angeordnet sind, und dass die entlang des Räumförderers gegebenenfalls angeordneten Räumelemente zur Beförderung des Backabfalls eingerichtet und entlang dem Räumförderer bewegbar sind.

Gegebenenfalls ist vorgesehen, dass die Abnahmevorrichtung dazu eingerichtet ist, die von der Transporteinrichtung in die Backvorrichtung, insbesondere in den Backraum, transportierten Waffelformkörper zu zerkleinern, wenn die Förderrichtung der Transporteinrichtung, insbesondere im Vergleich zu der Förderrichtung der Transporteinrichtung im Normalbetriebsmodus der Backvorrichtung, umgekehrt ist.

Gegebenenfalls ist vorgesehen, dass der Auftragsbereich, der Schließbereich, der Öffenbereich und der Entnahmebereich innerhalb des Backraums angeordnet sind, und/oder dass der Backraum als im Wesentlichen geschlossener Backraum ausgebildet ist, der an allen Seiten von wärmeisolierten Backraumwänden umgeben ist, und/oder dass in dem Backraum mindestens eine Heizanordnung zur Beheizung der im Backraum befindlichen Backformen vorgesehen ist, und/oder dass der Backraum im Backbetrieb durch die Heizanordnung im Auftragsbereich, im Schließbereich, im Öffenbereich und/oder im Entnahmebereich auf über 100°C, bevorzugt auf über 150°C oder besonders bevorzugt auf über oder etwa 175°C aufgeheizt ist.

Gegebenenfalls ist vorgesehen, dass der Endlosförderer oder mindestens die Backformen entlang einer oberen Transportebene verlaufen, dass der Endlosförderer oder mindestens die Backformen in einem hinteren Umlenkbereich auf eine, unterhalb der oberen Transportebene verlaufende, untere Transportebene umgelenkt werden, dass der Endlosförderer oder mindestens die Backformen weiter entlang der unteren Transportebene verlaufen, und dass der Endlosförderer oder mindestens die Backformen in einem vorderen Umlenkbereich wieder auf die obere Transportebene umgelenkt werden, wobei die obere Transportebene, der hintere Umlenkbereich, die untere Transportebene und der vordere Umlenkbereich innerhalb des Backraums angeordnet sind, und/oder wobei der gesamte Endlosförderer und/oder mindestens alle an dem Endlosförderer angeordneten Backformen innerhalb des Backraums angeordnet sind.

Gegebenenfalls ist vorgesehen, dass die Backvorrichtung, insbesondere der Backraum, im Wesentlichen geschlossen ausgebildet ist, und/oder dass die Backvorrichtung, insbesondere der Backraum, mindestens einen Abzug, insbesondere ausschließlich zwei Abzüge, umfasst.

Durch die Abzüge können die Backraumgase aus der Backvorrichtung abgeführt werden.

Gegebenenfalls ist vorgesehen, dass die Backvorrichtung, insbesondere der Backraum, insbesondere ausschließlich, eine Produktöffnung und/oder eine Abfallöffnung umfasst, dass durch die Produktöffnung die gebackenen Waffelformkörper aus der Backvorrichtung, insbesondere dem Backraum, transportierbar sind, dass durch die Abfallöffnung der Backabfall aus der Backvorrichtung, insbesondere dem Backraum, transportierbar ist, und dass gegebenenfalls die Produktöffnung schlitzförmig ausgestaltet ist und/oder im Wesentlichen die Größe, insbesondere die Höhe und die Breite, des Waffelformkörpers aufweist.

Insbesondere betrifft die Erfindung ein Verfahren zur Vermeidung oder Behebung eines Produktstaus an einer Backvorrichtung, wobei mehrere Backformen entlang eines Endlosförderers angeordnet sind und jeweils nacheinander durch einen Auftragsbereich zum Einbringen einer Backmasse in die geöffneten Backformen,
einen Schließbereich zum Schließen der Backformen, einen, insbesondere beheizten, Backraum zum Backen der in den Backformen eingebrachten Backmasse, einen Öffenbereich zum Öffnen der Backformen, und einen Entnahmebereich zur Entnahme der aus der Backmasse gebackenen formstabilen Waffelformkörper aus den geöffneten Backformen bewegt werden, wobei die entnommenen Waffelformkörper über eine Transporteinrichtung aus der Backvorrichtung, insbesondere aus dem Backraum, transportiert werden, wobei die Förderrichtung der Transporteinrichtung über eine Steuervorrichtung der Backvorrichtung gesteuert wird, wobei im Normalbetriebsmodus der Backvorrichtung die entnommenen Waffelformkörper mit der Transporteinrichtung aus der Backvorrichtung, insbesondere aus dem Backraum, transportiert werden, und wobei im Umkehrbetriebsmodus die Förderrichtung der Transporteinrichtung gegenüber dem Normalbetriebsmodus umgekehrt ist.

Die Verfahrensschritte können insbesondere dann durchgeführt werden, wenn ein Waffelblattstau detektiert wird.

Gegebenenfalls ist vorgesehen, dass das Verfahren automatisiert, insbesondere in der Steuervorrichtung der Backvorrichtung, abläuft.

In allen Ausführungsformen ist bevorzugt vorgesehen, dass das erfindungsgemäße Verfahren automatisiert, insbesondere durch die Steuervorrichtung der Backvorrichtung gesteuert und/oder geregelt ausgeführt wird.

Durch das Verfahren kann gegebenenfalls ein Produktstau in der Backvorrichtung, insbesondere automatisiert und ohne Eingriff der Bedienperson, behoben werden.

Gegebenenfalls ist vorgesehen, dass im Umkehrbetriebsmodus der Backvorrichtung die entnommenen Waffelformkörper, insbesondere mit der Transporteinrichtung, auf ein Räumgerät befördert werden, mit welchem der im Backraum anfallende Backabfall und/oder die Waffelformkörper automatisch oder automatisiert ausgetragen wird oder werden.

Gegebenenfalls ist vorgesehen, dass die Anzahl der aus der Backvorrichtung beförderten Waffelformkörper mit einer Detektionsvorrichtung, insbesondere einer Lichtschranke, detektiert wird, wodurch die Anzahl der fehlenden Waffelformkörper in Abhängigkeit von Backvorrichtungsparametern, insbesondere von der Umlaufgeschwindigkeit der Backformen, bestimmt wird, und dass, wenn die Anzahl der fehlenden Waffelformkörper einem vorab definierten Schwellenwert entspricht oder einen vorab definierten Schwellenwert überschreitet, die Backvorrichtung, insbesondere automatisiert, für eine vorab definierte Zeitdauer im Umkehrbetriebsmodus betrieben wird.

Gegebenenfalls ist vorgesehen, dass mit einer Zählvorrichtung die Anzahl der Wechsel zwischen dem Normalbetriebsmodus und dem Umkehrbetriebsmodus detektiert wird, und dass, falls die Anzahl der Wechsel einen vorab definierten Schwellenwert überschreitet oder erreicht, ein Alarmsignal ausgegeben wird, wodurch das Bedienpersonal der Backvorrichtung über einen Stau in der Backvorrichtung informiert wird.

Die Detektionsvorrichtung kann dazu eingerichtet sein, den Wechsel zwischen Normalbetriebsmodus und Umkehrbetriebsmodus zu detektieren.

Insbesondere ist die Detektionsvorrichtung dazu eingerichtet zu detektieren, wie oft die Backvorrichtung hintereinander im Umkehrbetriebsmodus betrieben wird, welcher nur durch eine vorab definierte Zeitspanne vom Normalbetriebsmodus unterbrochen wird.

Gegebenenfalls ist vorgesehen, dass die Backvorrichtung eine erfindungsgemäße Backvorrichtung ist.

Gegebenenfalls ist die Steuervorrichtung dazu eingerichtet, die Drehrichtung und/oder den Antrieb der Transporteinrichtung umzukehren.

Die Steuervorrichtung kann derart ausgestaltet sein, dass die Steuervorrichtung weiß, wann Waffelformkörper aus der Backvorrichtung kommen sollten.

Gegebenenfalls ist eine Detektionsvorrichtung, insbesondere ein Lichtschranke, vorgesehen. Die Detektionsvorrichtung kann derart angeordnet sein, dass die Anzahl der von der Transporteinrichtung aus der Backvorrichtung, insbesondere aus dem Backraum, transportierten Waffelformkörpern detektierbar ist.

Insbesondere ist die Detektionsvorrichtung derart ausgestaltet, dass die Anzahl der von der Transporteinrichtung aus der Backvorrichtung, insbesondere aus dem Backraum, transportierten Waffelformkörpern zählbar ist.

Falls das Fehlen eines Waffelformkörpers durch die Detektionsvorrichtung detektiert wird, erhöht sich gegebenenfalls ein Zähler, insbesondere ein sogenannter Fehler-Zähler, um die Zahl eins, welcher dazu eingerichtet ist, die fehlenden Waffelformkörper zu zählen.

Falls anschließend wieder ein Waffelformkörper durch die Detektionsvorrichtung detektiert wird, wird dieser Zähler, insbesondere der sogenannte Fehler-Zähler, gegebenenfalls wieder auf null gesetzt.

Falls der Zähler, insbesondere der sogenannte Fehler-Zähler, einen vorab eingestellten Schwellwert überschreitet oder erreicht, wird die Backvorrichtung im Umkehrbetriebsmodus betrieben. Der Schwellenwert kann beispielweise drei sein, das heißt, dass voraussichtlich bereits drei Blätter in der Backvorrichtung gestaut, verkeilt oder hängen geblieben sind.

Der Zähler, insbesondere der sogenannte Fehler-Zähler, kann mit der Steuervorrichtung verbunden sein. Die Detektionsvorrichtung kann mit der Steuervorrichtung verbunden sein.

Durch die erfindungsgemäße Backvorrichtung und/oder das erfindungsgemäße Verfahren ist gegebenenfalls ein Stau der Waffelformkörper, insbesondere ein sogenannter Produktstau, in der Backvorrichtung selbständig, insbesondere ohne Eingriff der Bedienperson, behebbar.

Weitere erfindungsgemäße Merkmale ergeben sich gegebenenfalls aus den Ansprüchen, der Beschreibung der Ausführungsbeispiele und den Figuren.

Die Erfindung wird nun am Beispiel exemplarischer, nicht ausschließlicher und/oder nicht einschränkender Ausführungsbeispiele weiter erläutert.
Fig. 1 zeigt eine schematische grafische Darstellung einer ersten Ausführungsform der erfindungsgemäßen Backvorrichtung, und
Fig. 2a und Fig. 2b zeigen schematische grafische Darstellungen einer zweiten Ausführungsform der erfindungsgemäßen Backvorrichtung.

Wenn nicht anders angegeben, so entsprechen die Bezugszeichen folgenden Komponenten:
1 Backvorrichtung, 2 Waffelformkörper, 3 Endlosförderer, 4 Auftragsbereich, 5 Schließbereich, 6 Backraum, 7 Öffenbereich, 8 Entnahmebereich, 9 Backform, 10 Transporteinrichtung, 11 Abnahmevorrichtung, 12 Detektionsvorrichtung, 13 Steuervorrichtung, 14 Förderrichtung (der Transporteinrichtung), 15 Abnahmearm, 16 Räumanordnung, 17 Räumelement, 18 Heizanordnung, 19 Abzug, 20, Produktöffnung, 21 Abfallöffnung, 22 Drehrichtung (der Abnahmevorrichtung) und 23 Backraumwand.

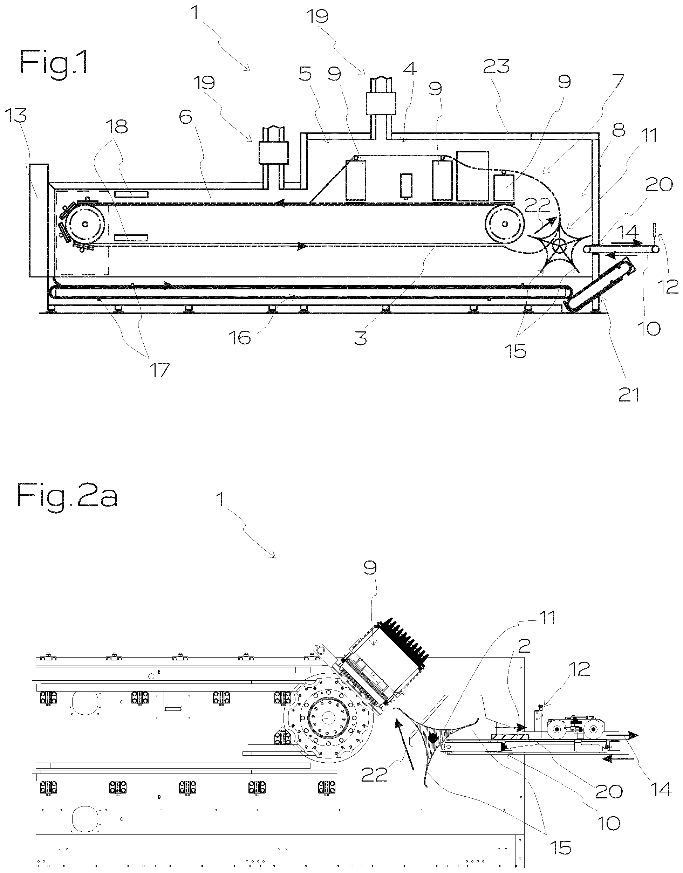

Fig. 1 zeigt eine schematische Darstellung einer ersten Ausführungsform der erfindungsgemäßen Backvorrichtung 1.

Die Backvorrichtung 1 ist zum Herstellen gebackener, bevorzugt essbarer, Waffelformkörper 2 eingerichtet und umfasst einen Endlosförderer 3. Entlang des Endlosförderers 3 sind mehrere Backformen 9 angeordnet. Die Richtung in welcher die Backformen 9 durch die Backvorrichtung 1 bewegt werden ist durch Pfeile schematisch eingezeichnet.

Die Backformen 9 durchlaufen jeweils nacheinander, einen Auftragsbereich 4 zum Einbringen einer Backmasse in die geöffneten Backformen 9, einen Schließbereich 5 zum Schließen der Backformen 9, einen, insbesondere beheizten, Backraum 6 zum Backen der in den Backformen 9 eingebrachten Backmasse, einen Öffenbereich 7 zum Öffnen der Backformen 9, und einen Entnahmebereich 8 zur Entnahme der aus der Backmasse gebackenen formstabilen Waffelformkörper 2 aus den geöffneten Backformen 9.

Die Backvorrichtung 1 umfasst eine Transporteinrichtung 10, welche zum Transport der entnommenen Waffelformkörper 2 aus der Backvorrichtung 1, insbesondere aus dem Backraum 6, eingerichtet ist.

Zur Entnahme der Waffelformkörper 2 aus den geöffneten Backformen 9 ist eine Abnahmevorrichtung 11 vorgesehen ist. Die Abnahmevorrichtung 11 ist dazu eingerichtet, die Waffelformkörper 2, im Wesentlichen beschädigungsfrei, aus den geöffneten Backformen 9 auf die Transporteinrichtung 10 zu überführen.

Darüber hinaus ist die Abnahmevorrichtung 11 dazu eingerichtet, die von der Transporteinrichtung 10 in die Backvorrichtung 1, bevorzugt in den Backraum 6, transportierten Waffelformkörper 2 zu zerkleinern, insbesondere wenn die Förderrichtung 14 der Transporteinrichtung umgekehrt ist.

Ferner ist eine Detektionsvorrichtung 12, insbesondere ein Lichtschranke, vorgesehen. Die Detektionsvorrichtung 12 ist dazu eingerichtet ist, eine Fehlfunktion zu detektieren.

Gemäß dieser Ausführungsform wird eine Fehlfunktion detektiert, wenn von der Detektionsvorrichtung 12, insbesondere von der Lichtschranke, durchgehend, insbesondere unterbrechungsfrei, ein Waffelformkörper 2 detektiert wird.

Gemäß dieser Ausführungsform wird eine Fehlfunktion detektiert, wenn von der Detektionsvorrichtung 12, insbesondere von der Lichtschranke, die Abwesenheit eines Waffelformkörpers 2 detektiert wird. Mit anderen Worten wird eine Fehlfunktion detektiert, wenn zwar ein Waffelformkörper 2 aufgegossen wird, aber das Fehlen dieses Waffelformkörpers 2, insbesondere auf der Transportvorrichtung, von der Detektionsvorrichtung 12 detektiert wird.

Gemäß dieser Ausführungsform wird eine Fehlfunktion detektiert, wenn von der Detektionsvorrichtung 12, insbesondere von der Lichtschranke, ein Waffelformkörperstau detektiert wird. Ein Waffelformkörperstau liegt dann vor, wenn mindestens ein Waffelformkörper 2 in der Backvorrichtung 1, insbesondere im Bereich der Produktöffnung 20, verkeilt, gestaut und/oder hängen geblieben ist.

Beispielweise ist die Detektionsvorrichtung 12 dazu eingerichtet festzustellen, ob ein Waffelformkörper 2 in der Backvorrichtung 1, insbesondere im Bereich der Produktöffnung 20, verkeilt, gestaut und/oder hängen geblieben ist. Unter anderem ist die Detektionsvorrichtung 12 gemäß dieser Ausführungsform auch dazu eingerichtet die Anzahl der von der Transporteinrichtung 10 aus der Backvorrichtung 1, insbesondere aus dem Backraum 6, transportierten Waffelformkörper 2 zu detektieren.

Die Backvorrichtung 1 umfasst eine Steuervorrichtung 13, welche zur Steuerung der Förderrichtung 14 der Transporteinrichtung eingerichtet ist. Insbesondere ist die Steuervorrichtung 13 dazu eingerichtet, die Förderrichtung 14 der Transporteinrichtung umzukehren, wenn eine Fehlfunktion detektiert wird.

Gemäß dieser Ausführungsform läuft das erfindungsgemäße Verfahren automatisiert ab und wird durch die Steuervorrichtung 13 der Backvorrichtung 1 gesteuert und/oder geregelt ausgeführt.

Die Anzahl der aus der Backvorrichtung 1 beförderten Waffelformkörper 2 detektiert die Detektionsvorrichtung 12, insbesondere die Lichtschranke. Dadurch ist die Anzahl der fehlenden Waffelformkörper 2, insbesondere in der Backvorrichtung 1 gestauten oder verkeilten Waffelformkörper 2, in Abhängigkeit von Backvorrichtungsparametern, insbesondere von der Umlaufgeschwindigkeit der Backformen 9, bestimmbar.

Im Normalbetriebsmodus der Backvorrichtung 1 wird der entnommene Waffelformkörper 2 mit der Transporteinrichtung 10 durch die Produktöffnung 20 aus der Backvorrichtung 1, insbesondere aus dem Backraum 6, transportiert. Zur besseren Ersichtlichkeit ist die Förderrichtung 14 der Transporteinrichtung im Normalbetriebsmodus durch einen Pfeil eingezeichnet.

Im Umkehrbetriebsmodus der Backvorrichtung 1 wird der entnommene Waffelformkörper 2 mit der Transporteinrichtung 10 in die Backvorrichtung 1, insbesondere in den Backraum 6, in Richtung der Abnahmevorrichtung 11 zurück transportiert. Im Umkehrbetriebsmodus ist die Förderrichtung 14 der Transporteinrichtung gegenüber dem Normalbetriebsmodus umgekehrt.

Gemäß dieser Ausführungsform wird die Backvorrichtung 1 automatisiert für eine vorab definierte Zeitdauer im Umkehrbetriebsmodus betrieben, wenn die Anzahl der fehlenden Waffelformkörper 2 einem vorab definierten Schwellenwert entspricht oder diesen überschreitet oder abweicht.

Durch die Umkehrung der Förderrichtung 14 der Transporteinrichtung 10 sind die, insbesondere im Bereich der Produktöffnung 20, gestauten, verkeilten und/oder hängengebliebenen Waffelformkörper 2 in Richtung der Abnahmevorrichtung 11 transportierbar und in weiterer Folge auf die Räumanordnung 16 überführbar.

Mit einer Zählvorrichtung ist die Anzahl der Wechsel zwischen dem Normalbetriebsmodus und dem Umkehrbetriebsmodus bestimmbar. Falls die Anzahl der Wechsel einen vorab definierten Schwellenwert überschreitet oder erreicht, wird ein Alarmsignal an der Backvorrichtung 1 ausgegeben, wodurch das Bedienpersonal der Backvorrichtung 1 über einen Stau in der Backvorrichtung 1 informiert wird.

Sowohl die Zählvorrichtung als auch die Detektionsvorrichtung 12 sind mit der Steuervorrichtung 13 verbunden.

Gemäß dieser Ausführungsform weist die Abnahmevorrichtung 11 fünf Abnahmearme 15 auf und die Transporteinrichtung 10 umfasst zwei beabstandet voneinander angeordnete Transportvorrichtungen.

Wenn sich die Abnahmevorrichtung 11 dreht, greifen die Abnahmearme 15 und die zwei Transportvorrichtungen kammförmig ineinander. Zur besseren Ersichtlichkeit ist die Drehrichtung 22 der Abnahmevorrichtung 11 durch einen Pfeil dargestellt. Die Drehrichtung 22 der Abnahmevorrichtung 11 ist im Normalbetriebsmodus und im Umkehrbetriebsmodus gleich.

Gemäß dieser Ausführungsform ist unterhalb des Endlosförderers 3 eine Räumanordnung 16 angeordnet. Die Räumanordnung 16 ist zum automatischen oder automatisierten Austrag von im Backraum 6 anfallendem Backabfall und/oder von Waffelformkörpern 2 durch die Abfallöffnung 21 eingerichtet. Die Richtung in welcher der Backabfall bewegt wird ist durch Pfeile schematisch eingezeichnet.

An der Räumanordnung 16 sind Räumelemente 17 angeordnet, welche zur Beförderung des Backabfalls eingerichtet und entlang der Räumanordnung 16 bewegbar sind.

Gemäß dieser Ausführungsform sind der Auftragsbereich 4, der Schließbereich 5, der Öffenbereich 7 und der Entnahmebereich 8 innerhalb des Backraums 6 angeordnet. Der Backraum 6 ist als im Wesentlichen geschlossener Backraum 6 ausgebildet und an allen Seiten von wärmeisolierten Backraumwänden 23 umgeben.

In dem Backraum 6 sind zwei Heizanordnungen 18 zur Beheizung der im Backraum 6 befindlichen Backformen 9 vorgesehen.

Im Backbetrieb ist der Backraum 6 durch die Heizanordnung 18 im Auftragsbereich 4, im Schließbereich 5, im Öffenbereich 7 und/oder im Entnahmebereich 8 auf über 100°C, bevorzugt auf über 150°C oder besonders bevorzugt auf über oder etwa 175°C aufgeheizt.

Gemäß dieser Ausführungsform laufen die Backformen 9 entlang einer oberen Transportebene. Die Backformen 9 werden in einem hinteren Umlenkbereich auf eine, unterhalb der oberen Transportebene verlaufende, untere Transportebene umgelenkt. Die Backformen 9 verlaufen weiter entlang der unteren Transportebene. Die Backformen 9 werden in einem vorderen Umlenkbereich wieder auf die obere Transportebene umgelenkt.

Gemäß dieser Ausführungsform sind die obere Transportebene, der hintere Umlenkbereich, die untere Transportebene und der vordere Umlenkbereich innerhalb des Backraums 6 angeordnet. Ferner sind auch der gesamte Endlosförderer 3 und alle an dem Endlosförderer 3 angeordneten Backformen 9 innerhalb des Backraums 6 angeordnet.

Die Backvorrichtung 1 ist im Wesentlichen geschlossen ausgebildet und umfasst ausschließlich zwei Abzüge 19, die Produktöffnung 20 und die Abfallöffnung 21. Mit anderen Worten weist die Backvorrichtung 1 gemäß dieser Ausführungsform keine anderen Öffnungen auf.

Durch die Produktöffnung 20 sind die gebackenen Waffelformkörper 2 aus der Backvorrichtung 1, insbesondere dem Backraum 6, transportierbar. Durch die Abfallöffnung 21 ist der Backabfall aus der Backvorrichtung 1, insbesondere dem Backraum 6, transportierbar.

Die Produktöffnung 20 ist schlitzförmig ausgestaltet und/oder weist im Wesentlichen die Größe, insbesondere die Höhe und die Breite, des Waffelformkörpers 2 auf.

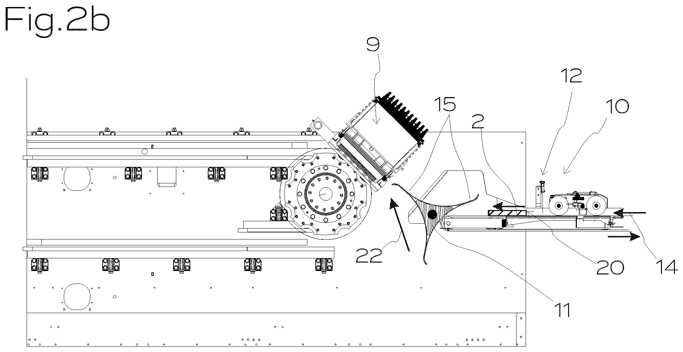

Fig. 2a und 2b zeigen schematische grafische Darstellungen einer zweiten Ausführungsform der erfindungsgemäßen Backvorrichtung 1. Die Merkmale der Ausführungsform gemäß den Figuren 2a und 2b können bevorzugt den Merkmalen der Ausführungsform gemäß der Figur 1 entsprechen.

Im Gegensatz zu der ersten Ausführungsform weist die Abnahmevorrichtung 11 gemäß der zweiten Ausführungsform drei Abnahmearme 15 auf.

Figur 2a zeigt die zweite Ausführungsform der erfindungsgemäßen Backvorrichtung 1 im Normalbetriebsmodus. Im Normalbetriebsmodus werden die Waffelformkörper 2 von der Abnahmevorrichtung 11 aus der geöffneten Backform 9, insbesondere beschädigungsfrei, auf die Transporteinrichtung 10 überführt.

In weiterer Folge transportiert die Transporteinrichtung 10 die Waffelformkörper 2 durch die Produktöffnung 20 aus der Backvorrichtung 1, insbesondere aus dem Backraum 6.

Figur 2b zeigt die zweite Ausführungsform der erfindungsgemäßen Backvorrichtung 1 im Umkehrbetriebsmodus. Die Backvorrichtung 1 wird automatisch im Umkehrbetriebsmodus betrieben, wenn eine Fehlfunktion detektiert wurde.

Im Umkehrbetriebsmodus ist die Förderrichtung 14 der Transporteinrichtung gegenüber der Förderrichtung 14 der Transporteinrichtung 10 im Normalbetriebsmodus umgekehrt. Das heißt, dass die Förderrichtung 14 der Transporteinrichtung 10 im Umkehrbetriebsmodus der Förderrichtung 14 der Transporteinrichtung 10 im Normalbetriebsmodus entgegengesetzt ist.

Im Umkehrbetriebsmodus werden die Waffelformkörper 2 durch die Fördereinrichtung 10 in die Backvorrichtung 1, insbesondere in den Backraum 6, in Richtung der Abnahmevorrichtung 11 befördert. In weiterer Folge werden die Waffelformkörper 2 von der Abnahmevorrichtung 11 zerkleinert.

Insbesondere werden die Waffelformkörper 2 zerkleinert, wenn die Abnahmevorrichtung 11 und die Transporteinrichtung 10 kammförmig ineinander greifen.

Durch diese beispielhaften Konfigurationen können die erfindungsgemäßen Effekte erzielt werden.

Die Erfindung beschränkt sich nicht auf die dargestellten Ausführungsformen, sondern umfasst jegliche Backvorrichtung 1 und jegliches Verfahren gemäß den nachfolgenden Patentansprüchen.

## Patentansprüche

1. **Backvorrichtung** (1) zum Herstellen gebackener, bevorzugt essbarer, Waffelformkörper (2),
- wobei mehrere Backformen (9) entlang eines Endlosförderers (3) angeordnet sind und jeweils nacheinander:
einen Auftragsbereich (4) zum Einbringen einer Backmasse in die geöffneten Backformen (9),
einen Schließbereich (5) zum Schließen der Backformen (9), einen, insbesondere beheizten, Backraum (6) zum Backen der in den Backformen (9) eingebrachten Backmasse,
einen Öffenbereich (7) zum Öffnen der Backformen (9),
und einen Entnahmebereich (8) zur Entnahme der aus der Backmasse gebackenen formstabilen Waffelformkörper (2) aus den geöffneten
Backformen (9),
durchlaufen,
- wobei eine Transporteinrichtung (10) zum Transport der entnommenen Waffelformkörper (2) aus der Backvorrichtung (1), insbesondere aus dem Backraum (6), vorgesehen ist,
- wobei die Förderrichtung (14) der Transporteinrichtung (10) umkehrbar ist,
- und wobei zur Entnahme der Waffelformkörper (2) aus den geöffneten Backformen (9) eine Abnahmevorrichtung (11) vorgesehen ist,
**dadurch gekennzeichnet,**
- **dass** eine Detektionsvorrichtung (12), insbesondere eine Lichtschranke, vorgesehen ist, welche zur Detektion einer Fehlfunktion eingerichtet ist,
- **dass** die Backvorrichtung (1) eine Steuervorrichtung (13) zur, insbesondere automatisierten, Steuerung der Förderrichtung (14) der Transporteinrichtung umfasst, welche dazu eingerichtet ist, die Förderrichtung (14) der Transporteinrichtung umzukehren, wenn eine Fehlfunktion durch die Detektionsvorrichtung (12) erkannt wird,
- **dass** die Abnahmevorrichtung (11) dazu eingerichtet ist, die Waffelformkörper (2), aus den geöffneten Backformen (9) auf die Transporteinrichtung (10) zu überführen und die von der Transporteinrichtung (10) in die Backvorrichtung (1), insbesondere in den Backraum (6), transportierten Waffelformkörper (2) zu zerkleinern, wenn die Förderrichtung (14) der Transporteinrichtung umgekehrt ist.

2. Backvorrichtung (1) nach Anspruch 1, **dadurch gekennzeichnet,**
- **dass** die Backvorrichtung (1) derart ausgestaltet ist, dass in einem Normalbetriebsmodus der Backvorrichtung (1) die entnommenen Waffelformkörper (2) mit der Transporteinrichtung (10) aus der Backvorrichtung (1), insbesondere aus dem Backraum (6), transportiert werden,
- **und dass** die Backvorrichtung (1) derart ausgestaltet ist, dass in einem Umkehrbetriebsmodus der Backvorrichtung (1) die Förderrichtung (14) der Transporteinrichtung (10) gegenüber dem Normalbetriebsmodus umgekehrt ist.

3. Backvorrichtung (1) nach Anspruch 1 oder 2, **dadurch gekennzeichnet,**
- **dass** die Abnahmevorrichtung (11) mindestens einen Abnahmearm (15) aufweist,
- **dass** die Transporteinrichtung (10) mindestens eine Transportvorrichtung, insbesondere mindestens zwei beabstandet voneinander angeordnete, Transportvorrichtungen umfasst,
- **und dass** der mindestens eine Abnahmearm (15) und die mindestens eine Transportvorrichtung kammförmig ineinandergreifen.

4. Backvorrichtung (1) nach einem der vorangegangenen Ansprüche, **dadurch gekennzeichnet, dass** die Backvorrichtung (1) eine Räumanordnung (16) zum automatischen oder automatisierten Austrag von im Backraum (6) anfallendem Backabfall und/oder von Waffelformkörpern (2) umfasst.

5. Backvorrichtung (1) nach Anspruch 4, **dadurch gekennzeichnet,**
- **dass** die Räumanordnung (16) einen als Endlosförderer (3) ausgebildeten Räumförderer umfasst,
- **dass** der Räumförderer oder mindestens die an dem Räumförderer gegebenenfalls angebrachten Räumelemente (17) unterhalb des Endlosförderers (3) angeordnet sind,
- **und dass** die entlang des Räumförderers gegebenenfalls angeordneten Räumelemente (17) zur Beförderung des Backabfalls eingerichtet und entlang dem Räumförderer bewegbar sind.

6. Backvorrichtung (1) nach einem der vorangegangenen Ansprüche, **dadurch gekennzeichnet, dass** die Abnahmevorrichtung (11) dazu eingerichtet ist, die von der Transporteinrichtung (10) in die Backvorrichtung (1), insbesondere in den Backraum (6), transportierten Waffelformkörper (2) zu zerkleinern, wenn die Förderrichtung (14) der Transporteinrichtung (10), insbesondere im Vergleich zu der Förderrichtung (14) der Transporteinrichtung (10) im Normalbetriebsmodus der Backvorrichtung (1), umgekehrt ist.

7. Backvorrichtung (1) nach einem der vorangegangenen Ansprüche, **dadurch gekennzeichnet,**
- **dass** der Auftragsbereich (4), der Schließbereich (5), der Öffenbereich (7) und der Entnahmebereich (8) innerhalb des Backraums (6) angeordnet sind,
- **und/oder dass** der Backraum (6) als im Wesentlichen geschlossener Backraum (6) ausgebildet ist, der an allen Seiten von wärmeisolierten Backraumwänden (23) umgeben ist,
- **und/oder dass** in dem Backraum (6) mindestens eine Heizanordnung (18) zur Beheizung der im Backraum (6) befindlichen Backformen (9) vorgesehen ist,
- **und/oder dass** der Backraum (6) im Backbetrieb durch die Heizanordnung (18) im Auftragsbereich (4), im Schließbereich (5), im Öffenbereich (7) und/oder im Entnahmebereich (8) auf über 100°C, bevorzugt auf über 150°C oder besonders bevorzugt auf über oder etwa 175°C aufgeheizt ist.

8. Backvorrichtung (1) nach einem der vorangegangenen Ansprüche, **dadurch gekennzeichnet,**
- **dass** der Endlosförderer (3) oder mindestens die Backformen (9) entlang einer oberen Transportebene verlaufen,
- **dass** der Endlosförderer (3) oder mindestens die Backformen (9) in einem hinteren Umlenkbereich auf eine, unterhalb der oberen Transportebene verlaufende, untere Transportebene umgelenkt werden,
- **dass** der Endlosförderer (3) oder mindestens die Backformen (9) weiter entlang der unteren Transportebene verlaufen,
- **und dass** der Endlosförderer (3) oder mindestens die Backformen (9) in einem vorderen Umlenkbereich wieder auf die obere Transportebene umgelenkt werden,
- **wobei** die obere Transportebene, der hintere Umlenkbereich, die untere Transportebene und der vordere Umlenkbereich innerhalb des Backraums (6) angeordnet sind,
- **und/oder wobei** der gesamte Endlosförderer (3) und/oder mindestens alle an dem Endlosförderer (3) angeordneten Backformen (9) innerhalb des Backraums (6) angeordnet sind.

9. Backvorrichtung (1) nach einem der vorangegangenen Ansprüche, **dadurch gekennzeichnet,**
- **dass** die Backvorrichtung (1), insbesondere der Backraum (6), im Wesentlichen geschlossen ausgebildet ist,
- **und/oder dass** die Backvorrichtung (1), insbesondere der Backraum (6), mindestens einen Abzug (19), insbesondere ausschließlich zwei Abzüge (19), umfasst.

10. Backvorrichtung (1) nach einem der vorangegangenen Ansprüche, **dadurch gekennzeichnet,**
- **dass** die Backvorrichtung (1), insbesondere der Backraum (6), insbesondere ausschließlich, eine Produktöffnung (20) und/oder eine Abfallöffnung (21) umfasst,
- **dass** durch die Produktöffnung (20) die gebackenen Waffelformkörper (2) aus der Backvorrichtung (1), insbesondere dem Backraum (6), transportierbar sind,
- **dass** durch die Abfallöffnung (21) der Backabfall aus der Backvorrichtung (1), insbesondere dem Backraum (6), transportierbar ist,
- **und dass** gegebenenfalls die Produktöffnung (20) schlitzförmig ausgestaltet ist und/oder im Wesentlichen die Größe, insbesondere die Höhe und die Breite, des Waffelformkörpers (2) aufweist.

11. **Verfahren** zur Vermeidung oder Behebung eines Produktstaus an einer Backvorrichtung (1),
- wobei mehrere Backformen (9) entlang eines Endlosförderers (3) angeordnet sind und jeweils nacheinander durch:
einen Auftragsbereich (4) zum Einbringen einer Backmasse in die geöffneten Backformen (9),
einen Schließbereich (5) zum Schließen der Backformen (9), einen, insbesondere beheizten, Backraum (6) zum Backen der in den Backformen (9) eingebrachten Backmasse,
einen Öffenbereich (7) zum Öffnen der Backformen (9),
und einen Entnahmebereich (8) zur Entnahme der aus der Backmasse gebackenen formstabilen Waffelformkörper (2) aus den geöffneten
Backformen (9),
bewegt werden,
- wobei die entnommenen Waffelformkörper (2) über eine Transporteinrichtung (10) aus der Backvorrichtung (1), insbesondere aus dem Backraum (6), transportiert werden,
- wobei die Förderrichtung (14) der Transporteinrichtung über eine Steuervorrichtung (13) der Backvorrichtung (1) gesteuert wird,
- wobei im Normalbetriebsmodus der Backvorrichtung (1) die entnommenen Waffelformkörper (2) mit der Transporteinrichtung (10) aus der Backvorrichtung (1), insbesondere aus dem Backraum (6), transportiert werden,
- und wobei im Umkehrbetriebsmodus die Förderrichtung (14) der Transporteinrichtung gegenüber dem Normalbetriebsmodus umgekehrt ist.

12. Verfahren nach Anspruch 11, **dadurch gekennzeichnet, dass** im Umkehrbetriebsmodus der Backvorrichtung (1) die entnommenen Waffelformkörper (2), insbesondere mit der Transporteinrichtung (10), auf ein Räumgerät befördert werden, mit welchem der im Backraum (6) anfallende Backabfall und/oder die Waffelformkörper (2) automatisch oder automatisiert ausgetragen wird oder werden.

13. Verfahren nach Anspruch 11 oder 12, **dadurch gekennzeichnet,**
- **dass** die Anzahl der aus der Backvorrichtung (1) beförderten Waffelformkörper (2) mit einer Detektionsvorrichtung (12), insbesondere einer Lichtschranke, detektiert wird, wodurch die Anzahl der fehlenden Waffelformkörper (2) in Abhängigkeit von Backvorrichtungsparametern, insbesondere von der Umlaufgeschwindigkeit der Backformen (9), bestimmt wird,
- **und dass,** wenn die Anzahl der fehlenden Waffelformkörper (2) einem vorab definierten Schwellenwert entspricht oder einen vorab definierten Schwellenwert überschreitet, die Backvorrichtung (1), insbesondere automatisiert, für eine vorab definierte Zeitdauer im Umkehrbetriebsmodus betrieben wird.

14. Verfahren nach einem der Ansprüche 11 bis 13, **dadurch gekennzeichnet,**
- **dass** mit einer Zählvorrichtung die Anzahl der Wechsel zwischen dem Normalbetriebsmodus und dem Umkehrbetriebsmodus detektiert wird,
- **und dass,** falls die Anzahl der Wechsel einen vorab definierten Schwellenwert überschreitet oder erreicht, ein Alarmsignal ausgegeben wird, wodurch das Bedienpersonal der Backvorrichtung (1) über einen Stau in der Backvorrichtung (1) informiert wird.

15. Verfahren nach einem der Ansprüche 11 bis 14, **dadurch gekennzeichnet, dass** die Backvorrichtung (1) eine Backvorrichtung (1) nach einem der Ansprüche 1 bis 10 ist.
